# FASCICULE DE BREVET EUROPEEN

(11) **EP 4 069 654 B1**
(45) Date de publication et mention de la délivrance du brevet: **05.11.2025**
(21) Numéro de dépôt: 20817022.5
(22) Date de dépôt: 07.12.2020
(51) Int. Cl.: F02D 41/14, F02D 41/28, C04B 24/00, C04B 41/50, C04B 28/00, C04B 111/28, C04B 111/00

(54) **PROCEDE D'IGNIFUGATION DE MATERIAU**
VERFAHREN ZUM BRANDSCHUTZ VON MATERIAL
METHOD FOR FIREPROOFING MATERIAL

(30) Priorité: 05.12.2019 FR 1913832
(43) Date de publication de la demande: 12.10.2022
(73) Titulaire: Isolfeu-Creation, 57000 Metz (FR)
(72) Inventeur: TOUSSAINT, Philippe, 56530 QUEVEN (FR)
(74) Mandataire: Tripoz, Inès
(86) Numéro de dépôt international: PCT/EP2020/084956
(87) Numéro de publication internationale: WO 2021/111012

(56) Documents cités:
- EP-A1- 2 875 924
- WO-A1-2013/148846

## Description

L'invention concerne un procédé d'ignifugation de matériaux.

### Art antérieur

L'ignifugation de matériaux est réalisée couramment à l'aide d'additifs retardateurs de flamme comprenant des composés nocifs pour l'environnement et toxiques tels que les composés bromés ou chlorés.

Il existe une demande en forte croissance pour l'utilisation d'additifs alternatifs non toxiques et respectueux de l'environnement.

Les géopolymères issus de la chimie minérale représentent une alternative idéale, ils possèdent des propriétés de retardateur de flamme intrinsèques et ne requièrent pas pour leur fabrication l'utilisation de composants toxiques et nocifs pour l'environnement. Ces géopolymères sont préparés à partir d'un matériau pouzzolanique tel que le métakaolin qui en mélange avec une solution d'activation comprenant notamment une base alcaline et au moins un silicate, va se dissoudre formant ainsi une suspension viscoélastique. Cette suspension viscoélastique va par la suite se polymériser au repos, entrainant son durcissement et formant ainsi un géopolymère.

Cette réaction de polymérisation est une réaction de géopolymérisation en ce que des polymères inorganiques sont formés durant la réaction. Ces polymères inorganiques sont essentiellement composés de motifs silico-oxyde (-Si-O-Si-O-), silico-aluminate (-Si-O-Al-O-), ferro-silico-aluminate (-Fe-O-Si-O-Al-O-) ou encore alumino-phosphate (-Al-O-P-O-).

Le brevet FR2659963 divulgue des matériaux géopolymériques destinés à réaliser des revêtements coupe-feu.

Le brevet FR 2680194 divulgue un procédé d'isolation thermique d'un élément de construction utilisant un liant minéral géopolymère organique.

Le brevet EP2451758 divulgue des unités de constructions fabriquées à partir de ciment géopolymérique.

### Description détaillée de l'invention

L'invention concerne un procédé d'ignifugation de matériau comprenant les étapes de :
a) mise en contact dudit matériau avec une suspension viscoélastique obtenue par le mélange d'un matériau pouzzolanique avec une solution d'activation alcaline comprenant au moins un hydroxyde de métal soluble dans laquelle la concentration molaire en ions hydroxyde de la solution d'activation est comprise entre 3 et 8 M;
b) géopolymérisation de ladite suspension viscoélastique ;
c) obtention d'un matériau ignifugé comprenant un géopolymère.

On entend par « viscoélastique », la propriété de matériaux qui présentent des caractéristiques à la fois visqueuses et élastiques, lorsqu'ils subissent une déformation. Les matériaux visqueux, résistent à un écoulement en cisaillement et présentent une déformation qui augmente linéairement avec le temps lorsqu'une contrainte est appliquée. Les matériaux élastiques se déforment lorsqu'ils sont contraints, et retournent rapidement à leur état d'origine une fois la contrainte retirée. En rhéologie, le comportement d'un matériau viscoélastique linéaire est ainsi intermédiaire entre celui d'un solide élastique idéal symbolisé par un ressort de module E (ou G) et celui d'un liquide visqueux newtonien symbolisé par un amortisseur de viscosité. L'élasticité d'un matériau traduit sa capacité à conserver et restituer de l'énergie après déformation. La viscosité d'un matériau traduit sa capacité à dissiper de l'énergie.

Le comportement viscoélastique de ladite suspension est mis en évidence au cours du vieillissement c'est-à-dire lorsque la suspension se rapproche du durcissement ou plus précisément du stade où elle devient viscoplastique. L'étude rhéologique de ladite suspension viscoélastique confirme l'existence d'un seuil d'écoulement en début de la mesure lorsque celle-ci est au repos. Elle montre aussi que soumis à une vitesse de cisaillement croissante, la viscosité diminue. Le comportement rhéologique de ladite suspension viscoélastique a une phase thixotropique définie par un seuil d'écoulement et a ensuite un profil rhéo-fluidifiant. Après plusieurs heures de vie en pot ce comportement devient rhéoépaississant. Dans les premières heures suivant sa fabrication, la rhéologie du liant est de type non Newtonien et viscoélastique.

On entend par « ignifugation », le traitement d'une matière ou d'un matériau pour diminuer son inflammabilité.

Dans un mode de réalisation, le procédé d'ignifugation de matériau selon l'invention est caractérisé en ce que le au moins un hydroxyde de métal soluble est hydroxyde de métal alcalin.

De préférence le au moins un hydroxyde de métal alcalin est choisi dans le groupe constitué de l'hydroxyde de sodium et l'hydroxyde de potassium, seuls ou en combinaison.

Dans un mode de réalisation, le procédé d'ignifugation de matériau selon l'invention est caractérisé en ce que ladite solution d'activation alcaline comprend en outre au moins un silicate.

Dans un mode de réalisation, le procédé d'ignifugation de matériau selon l'invention est caractérisé en ce que ledit au moins un silicate comprend un oxyde de métal alcalin soluble.

De préférence, le au moins un silicate comprenant un oxyde de métal alcalin soluble est choisi dans le groupe constitué du silicate de sodium et du silicate de potassium, seuls ou en combinaison.

Dans un mode de réalisation, le procédé d'ignifugation de matériau selon l'invention est caractérisé en ce que la concentration en silicate de ladite suspension viscoélastique est comprise entre 5 % et 25 % en masse.

Dans un mode de réalisation, le procédé d'ignifugation de matériau selon l'invention est caractérisé en ce que la concentration en silicate de ladite suspension viscoélastique est comprise entre 5 % et 20 % en masse.

Dans un mode de réalisation, le procédé d'ignifugation de matériau selon l'invention est caractérisé en ce que la concentration en silicate de ladite suspension viscoélastique est comprise entre 10 % et 15 % en masse.

Dans un mode de réalisation, le procédé d'ignifugation de matériau selon l'invention est caractérisé en ce que la concentration en matériau pouzzolanique de ladite suspension viscoélastique est comprise entre 15 % et 50 % en masse.

Dans un mode de réalisation, le procédé d'ignifugation de matériau selon l'invention est caractérisé en ce que la concentration en matériau pouzzolanique de ladite suspension viscoélastique est comprise entre 20 % et 45 % en masse.

Dans un mode de réalisation, le procédé d'ignifugation de matériau selon l'invention est caractérisé en ce que la concentration en matériau pouzzolanique de ladite suspension viscoélastique est comprise entre 25 % et 40 % en masse.

Dans un mode de réalisation, le procédé d'ignifugation de matériau selon l'invention est caractérisé en ce que ledit matériau pouzzolanique est du métakaolin.

On entend par « métakaolin » une argile kaolinique thermiquement déshydroxylée. En d'autres termes, il s'agit d'un silicate d'alumine déshydroxylé de composition générale Al₂O₃, 2SiO₂.

Dans un mode de réalisation, le procédé d'ignifugation de matériau selon l'invention est caractérisé en ce que la concentration du au moins un hydroxyde de métal soluble de ladite suspension viscoélastique est comprise entre 2 % et 10 % en masse.

Dans un mode de réalisation, le procédé d'ignifugation de matériau selon l'invention est caractérisé en ce que la concentration du au moins un hydroxyde de métal soluble de ladite suspension viscoélastique est comprise entre 2 % et 8 % en masse.

Dans un mode de réalisation, le procédé d'ignifugation de matériau selon l'invention est caractérisé en ce que la concentration du au moins un hydroxyde de métal soluble de ladite suspension viscoélastique est comprise entre 4 % et 8 % en masse.

Dans un mode de réalisation, le procédé d'ignifugation de matériau selon l'invention est caractérisé en ce que ladite solution d'activation alcaline comprend en outre au moins un agent hydrophobe choisi dans le groupe constitué des siliconates, des silanes, des siloxanes, et leurs mélanges.

Dans un mode de réalisation, le procédé d'ignifugation de matériau selon l'invention est caractérisé en ce que la concentration du au moins un agent hydrophobe de ladite suspension viscoélastique est comprise entre 1 % et 7 % en masse.

Dans un mode de réalisation, le procédé d'ignifugation de matériau selon l'invention est caractérisé en ce que la concentration du au moins un agent hydrophobe de ladite suspension viscoélastique est comprise entre 1 % et 5 % en masse.

Dans un mode de réalisation, le procédé d'ignifugation de matériau selon l'invention est caractérisé en ce que la concentration du au moins un agent hydrophobe de ladite suspension viscoélastique est comprise entre 2 % et 4 % en masse.

Dans un mode de réalisation, le procédé d'ignifugation de matériau selon l'invention est caractérisé en ce que ladite solution d'activation alcaline comprend en outre au moins un tensio-actif.

Dans un mode de réalisation, le procédé d'ignifugation de matériau selon l'invention est caractérisé en ce que ladite solution d'activation alcaline comprend en outre au moins un tensio-actif anionique choisi dans le groupe constitué par les C8-C18-alkyle sulfates, les C8-C18-alkyle éther sulfates, les acides C8-C18-alkyle aryle sulfonique, les acides gras en C8-C18 et leurs mélanges.

On entend par « tensio-actif anionique », un tensio-actif qui libère une charge négative en solution aqueuse. La classe des tensio-actifs anioniques est abondamment décrite dans la littérature.

Dans un mode de réalisation, le procédé d'ignifugation de matériau selon l'invention est caractérisé en ce que la concentration du au moins un tensio-actif de ladite suspension viscoélastique est comprise entre 0,005 % et 0,15 % en masse.

Dans un mode de réalisation, le procédé d'ignifugation de matériau selon l'invention est caractérisé en ce que la concentration du au moins un tensio-actif de ladite suspension viscoélastique est comprise entre 0,005 % et 0,075 % en masse.

Dans un mode de réalisation, le procédé d'ignifugation de matériau selon l'invention est caractérisé en ce que la concentration du au moins un tensio-actif de ladite suspension viscoélastique est comprise entre 0,005 % et 0,05 % en masse.

Dans un mode de réalisation, le procédé d'ignifugation de matériau selon l'invention est caractérisé en ce que le ratio SiO₂/Al₂O₃ de ladite suspension viscoélastique est compris entre 2 et 5.

Dans un mode de réalisation, le procédé d'ignifugation de matériau selon l'invention est caractérisé en ce que le ratio SiO₂/Al₂O₃ de ladite suspension viscoélastique est compris entre 2,5 et 4,5.

Dans un mode de réalisation, le procédé d'ignifugation de matériau selon l'invention est caractérisé en ce que le ratio SiO₂/Al₂O₃ de ladite suspension viscoélastique est compris entre 3 et 4.

Dans un mode de réalisation, le procédé d'ignifugation de matériau selon l'invention est caractérisé en ce que la masse volumique de la suspension viscoélastique mise en contact avec ledit matériau est comprise entre 500 et 3000 Kg/m³.

Dans un mode de réalisation, le procédé d'ignifugation de matériau selon l'invention est caractérisé en ce que la masse volumique de la suspension viscoélastique mise en contact avec ledit matériau est comprise entre 750 et 2500 Kg/m³.

Dans un mode de réalisation, le procédé d'ignifugation de matériau selon l'invention est caractérisé en ce que la masse volumique de la suspension viscoélastique mise en contact avec ledit matériau est comprise entre 1000 et 2000 Kg/m³.

Dans un mode de réalisation, le procédé d'ignifugation de matériau selon l'invention est caractérisé en ce que la masse volumique de la suspension viscoélastique mise en contact avec ledit matériau est comprise entre 1250 et 1750 Kg/m³.

Dans un mode de réalisation, le procédé d'ignifugation de matériau selon l'invention est caractérisé en ce que la mise en contact est réalisée par une technique choisie dans le groupe constitué de l'imprégnation, du mélange, de l'enduction ou couchage.

On entend par « imprégnation », l'action de pénétration d'une substance au sein d'un matériau en s'y répandant ou en s'y diffusant.

On entend par « mélange », action de mêler, de mettre ensemble des substances diverses, de les réunir en un tout.

On entend par « enduction ou couchage », l'action consistant à revêtir la surface d'un support avec un produit. L'application du produit sur la surface du support peut être réalisée en une ou plusieurs couches successives. Il est également possible après enduction de superposer sur la surface enduite une autre surface qui pourra être également enduite à son tour et répéter le processus autant de fois que nécessaire. Cette technique permet notamment de fabriquer des matériaux composites.

Dans un mode de réalisation, le procédé d'ignifugation de matériau selon l'invention est caractérisé en ce que ledit matériau est de forme choisie dans le groupe constitué des blocs, des fragments, des filaments ou fibres, des particules, seuls ou en combinaison.

On entend par « bloc », une masse compacte de quelque chose, d'une seule pièce, peu ou pas travaillée.

On entend par « fragments », des morceaux d'une chose brisée ou déchirée, débris.

On entend par « fibres ou filaments », un élément de forme allongée ou étirée.

On entend par « particules », de très petites parties de quelque chose.

Dans un mode de réalisation, le procédé d'ignifugation de matériau selon l'invention est caractérisé en ce que ledit matériau est choisi dans le groupe constitué des matériaux organiques et des matériaux inorganiques, seuls ou en combinaison.

On entend par « organique », qui provient directement ou indirectement de tissus ou d'organismes vivants, qui contiennent toujours du carbone. Cette définition intègre les molécules organiques issues de la pétrochimie par craquage d'hydrocarbures.

On entend par « inorganique », de consistance minérale.

Dans un mode de réalisation, le procédé d'ignifugation de matériau selon l'invention est caractérisé en ce que ledit matériau est perméable ou imperméable.

Dans un mode de réalisation, le procédé d'ignifugation de matériau selon l'invention est caractérisé en ce que la mise en contact dudit matériau avec ladite suspension viscoélastique est réalisée par imprégnation.

Dans un mode de réalisation, le procédé d'ignifugation de matériau selon l'invention est caractérisé en ce que ledit matériau imprégné est perméable.

Dans un mode de réalisation, le procédé d'ignifugation de matériau selon l'invention est caractérisé en ce que ledit matériau perméable imprégné est en matériau organique.

Dans un mode de réalisation, le procédé d'ignifugation de matériau selon l'invention est caractérisé en ce que ledit matériau perméable imprégné est en matériau inorganique.

Dans un mode de réalisation, le procédé d'ignifugation de matériau selon l'invention est caractérisé en ce que ledit matériau perméable imprégné est sous forme de bloc.

Dans un mode de réalisation, le procédé d'ignifugation de matériau selon l'invention est caractérisé en ce que ledit matériau perméable imprégné est sous forme de bloc en matériau organique.

Dans un mode de réalisation, le procédé d'ignifugation de matériau selon l'invention est caractérisé en ce que ledit matériau perméable imprégné sous forme de bloc en matériaux organiques est une mousse.

Dans un mode de réalisation, le procédé d'ignifugation de matériau selon l'invention est caractérisé en ce que ledit matériau perméable imprégné sous forme de bloc en matériaux organiques est une mousse polyuréthane.

Dans un mode de réalisation, le procédé d'ignifugation de matériau selon l'invention est caractérisé en ce que ledit matériau perméable imprégné est sous forme de bloc en matériau inorganique.

Dans un mode de réalisation, le procédé d'ignifugation de matériau selon l'invention est caractérisé en ce que ledit matériau perméable imprégné est sous forme de fragments.

Dans un mode de réalisation, le procédé d'ignifugation de matériau selon l'invention est caractérisé en ce que ledit matériau perméable imprégné est sous forme de fragments en matériaux organiques.

Dans un mode de réalisation, le procédé d'ignifugation de matériau selon l'invention est caractérisé en ce que ledit matériau perméable imprégné est sous forme de fragments en matériaux inorganiques.

Dans un mode de réalisation, le procédé d'ignifugation de matériau selon l'invention est caractérisé en ce que ledit matériau perméable imprégné est sous forme de filaments ou fibres.

Dans un mode de réalisation, le procédé d'ignifugation de matériau selon l'invention est caractérisé en ce que ledit matériau perméable imprégné est sous forme de filaments ou fibres organiques.

Dans un mode de réalisation, le procédé d'ignifugation de matériau selon l'invention est caractérisé en ce que ledit matériau perméable imprégné est sous forme de filaments ou fibres inorganiques.

Dans un mode de réalisation, le procédé d'ignifugation de matériau selon l'invention est caractérisé en ce que la mise en contact dudit matériau avec ladite suspension viscoélastique est réalisée par enduction ou couchage.

Dans un mode de réalisation, le procédé d'ignifugation de matériau selon l'invention est caractérisé en ce que la suspension viscoélastique est enduite pour un grammage de 50 à 1500 g/m2.

Dans un mode de réalisation, le procédé d'ignifugation de matériau selon l'invention est caractérisé en ce que la suspension viscoélastique est enduite pour un grammage de 150 à 1000 g/m2.

Dans un mode de réalisation, le procédé d'ignifugation de matériau selon l'invention est caractérisé en ce que la suspension viscoélastique est enduite pour un grammage de 250 à 900 g/m2.

Dans un mode de réalisation, le procédé d'ignifugation de matériau selon l'invention est caractérisé en ce que ledit matériau enduit est sous forme de bloc.

Dans un mode de réalisation, le procédé d'ignifugation de matériau selon l'invention est caractérisé en ce que ledit matériau enduit est sous forme de bloc en matériaux inorganiques.

Dans un mode de réalisation, le procédé d'ignifugation de matériau selon l'invention est caractérisé en ce que ledit matériau enduit est sous forme de bloc en matériaux organiques.

Dans un mode de réalisation, le procédé d'ignifugation de matériau selon l'invention est caractérisé en ce que ledit matériau enduit est sous forme de fragments.

Dans un mode de réalisation, le procédé d'ignifugation de matériau selon l'invention est caractérisé en ce que les ledit matériau enduit est sous forme de fragments en matériaux organiques.

Dans un mode de réalisation, le procédé d'ignifugation de matériau selon l'invention est caractérisé en ce que ledit matériau enduit est sous forme de fragments en matériaux inorganiques.

Dans un mode de réalisation, le procédé d'ignifugation de matériau selon l'invention est caractérisé en ce que ledit matériau enduit est sous forme de particules.

Dans un mode de réalisation, le procédé d'ignifugation de matériau selon l'invention est caractérisé en ce que ledit matériau enduit est sous forme de particules en matériaux organiques.

Dans un mode de réalisation, le procédé d'ignifugation de matériau selon l'invention est caractérisé en ce que ledit matériau enduit est sous forme de particules en matériaux inorganiques.

Dans un mode de réalisation, le procédé d'ignifugation de matériau selon l'invention est caractérisé en ce que ledit matériau enduit est sous forme de fibres ou filaments.

Dans un mode de réalisation, le procédé d'ignifugation de matériau selon l'invention est caractérisé en ce que ledit matériau enduit est sous forme de fibres ou filaments en matériaux organiques.

Dans un mode de réalisation, le procédé d'ignifugation de matériau selon l'invention est caractérisé en ce que ledit matériau enduit est sous forme de fibres ou filaments en matériaux inorganiques.

Dans un mode de réalisation, le procédé d'ignifugation de matériau selon l'invention est caractérisé en ce que la mise en contact dudit matériau avec ladite suspension viscoélastique est réalisée par mélange.

Dans un mode de réalisation, le procédé d'ignifugation de matériau selon l'invention est caractérisé en ce que ledit matériau mélangé est sous forme de fragments.

Dans un mode de réalisation, le procédé d'ignifugation de matériau selon l'invention est caractérisé en ce que ledit matériau mélangé est sous forme de fragments en matériaux organiques.

Dans un mode de réalisation, le procédé d'ignifugation de matériau selon l'invention est caractérisé en ce que ledit matériau mélangé est sous forme de fragments en matériaux inorganiques.

Dans un mode de réalisation, le procédé d'ignifugation de matériau selon l'invention est caractérisé en ce que ledit matériau mélangé est sous forme de particules.

Dans un mode de réalisation, le procédé d'ignifugation de matériau selon l'invention est caractérisé en ce que ledit matériau mélangé est sous forme de particules en matériaux organiques.

Dans un mode de réalisation, le procédé d'ignifugation de matériau selon l'invention est caractérisé en ce que ledit matériau mélangé est sous forme de particules en matériaux inorganiques.

Dans un mode de réalisation, le procédé d'ignifugation de matériau selon l'invention est caractérisé en ce que ledit matériau mélangé est sous forme de fibres ou filaments.

Dans un mode de réalisation, le procédé d'ignifugation de matériau selon l'invention est caractérisé en ce que ledit matériau mélangé est sous forme de fibres ou filaments en matériaux organiques.

Dans un mode de réalisation, le procédé d'ignifugation de matériau selon l'invention est caractérisé en ce que ledit matériau mélangé est sous forme de fibres ou filaments en matériaux inorganiques.

Les matériaux organiques utilisées dans le procédé d'ignifugations selon la présente invention quel que soit leurs formes sont avantageusement bio sourcés.

On entend par « bio sourcés », des matériaux issus de la matière organique renouvelable (biomasse), d'origine végétale ou animale. Ils peuvent être utilisés comme matière première dans des produits de construction et de décoration, de mobilier fixe et comme matériau de construction dans un bâtiment.

Une liste non limitative de matériaux biosourcés sont le bois, le liège, la paille, le chanvre, la ouate de cellulose, le textile recyclé, la laine animale, la laine de verre, la laine de roche, le polystyrène, les balles de céréales, le miscanthus, le lin, la chaume, l'herbe de prairie, les déchets passifs divers tels que par exemple des plumes et des broyages de provenance industrielle et/ou agroalimentaire, etc.

Ainsi en fin de procédé on obtient un matériau ignifugé totalement naturel sans additifs chimiques problématiques pour la santé.

Dans un mode de réalisation, le procédé d'ignifugation de matériau selon l'invention est caractérisé en ce qu'il comprend entre l'étape a) et b) une étape de mise en forme.

Dans un mode de réalisation, le procédé d'ignifugation de matériau selon l'invention est caractérisé en ce que l'étape de mise en forme est réalisée par une technique choisie dans le groupe constitué du pressage, du moulage, de l'extrusion.

On entend par « pressage », un procédé de façonnage à la presse.

On entend par « moulage », un procédé d'obtention d'un objet en remplissant un moule d'une substance qui conserve la forme du moule après durcissement ou solidification.

On entend par « extrusion », un procédé de mise en forme qui consiste à pousser la matière à travers une filière.

Dans un mode de réalisation, le procédé d'ignifugation de matériau selon l'invention est caractérisé en ce que l'étape de mise en forme est réalisée par pressage.

Dans un mode de réalisation, le procédé d'ignifugation de matériau selon l'invention est caractérisé en ce que l'étape de mise en forme est réalisée par moulage.

Dans un mode de réalisation, le procédé d'ignifugation de matériau selon l'invention est caractérisé en ce que l'étape de mise en forme est réalisée par extrusion.

Dans un mode de réalisation, le procédé d'ignifugation de matériau selon l'invention est caractérisé en ce qu'il comprend entre l'étape b) et c) une étape d'élimination du solvant.

Dans un mode de réalisation, le procédé d'ignifugation de matériau selon l'invention est caractérisé en ce que l'élimination du solvant est réalisée par séchage.

Dans un mode de réalisation, le procédé d'ignifugation de matériau selon l'invention est caractérisé en ce que le solvant est de l'eau.

Dans un mode de réalisation, le procédé d'ignifugation de matériau selon l'invention est caractérisé en ce qu'il comprend préalablement à l'étape a) une étape de fabrication de la suspension viscoélastique comprenant les étapes de :
w) Mise en solution aqueuse,
   - d'au moins un hydroxyde de métal soluble.
x) agitation et obtention d'une solution d'activation ;
y) introduction d'un matériau pouzzolanique dans ladite solution d'activation ;
z) Mélange et obtention d'une suspension viscoélastique.

Dans un mode de réalisation, le procédé d'ignifugation de matériau selon l'invention est caractérisé en ce que à l'étape w) le au moins un hydroxyde de métal soluble est un hydroxyde de métal alcalin.

De préférence le au moins un hydroxyde de métal alcalin est choisi dans le groupe constitué de l'hydroxyde de sodium et l'hydroxyde de potassium, seuls ou en combinaison.

Dans un mode de réalisation, le procédé d'ignifugation de matériau selon l'invention est caractérisé en ce que la concentration molaire en ions hydroxyde du au moins un hydroxyde de métal soluble mis en solution aqueuse est comprise entre 5 et 10 M.

Dans un mode de réalisation, le procédé d'ignifugation de matériau selon l'invention est caractérisé en ce que la concentration molaire en ions hydroxyde du au moins un hydroxyde de métal soluble mis en solution aqueuse est comprise entre 6 et 9 M.

Dans un mode de réalisation, le procédé d'ignifugation de matériau selon l'invention est caractérisé en ce que la concentration molaire en ions hydroxyde du au moins un hydroxyde de métal soluble mis en solution aqueuse est comprise entre 7 et 8 M.

Dans un mode de réalisation, le procédé d'ignifugation de matériau selon l'invention est caractérisé en ce que la concentration en hydroxyde de métal soluble de ladite solution d'activation est comprise entre 5 % et 20 % en masse.

Dans un mode de réalisation, le procédé d'ignifugation de matériau selon l'invention est caractérisé en ce que la concentration en hydroxyde de métal soluble de ladite solution d'activation est comprise entre 5 % et 15 % en masse.

Dans un mode de réalisation, le procédé d'ignifugation de matériau selon l'invention est caractérisé en ce que la concentration en hydroxyde de métal soluble de ladite solution d'activation est comprise entre 5 % et 10 % en masse.

Dans un mode de réalisation, le procédé d'ignifugation de matériau selon l'invention est caractérisé en ce qu'à l'étape w) est ajouté au moins un silicate.

Dans un mode de réalisation, le procédé d'ignifugation de matériau selon l'invention est caractérisé en ce qu'à l'étape w) est ajouté au moins un silicate comprenant un oxyde de métal alcalin soluble.

Ledit silicate comprenant un oxyde de métal alcalin soluble est de formule SiO₂, M₂O, H₂O avec M étant un métal alcalin.

Dans un mode de réalisation, le procédé d'ignifugation de matériau selon l'invention est caractérisé en ce que le rapport M₂O/SiO₂ de ladite solution d'activation est compris entre 0,1 et 0,4.

Dans un mode de réalisation, le procédé d'ignifugation de matériau selon l'invention est caractérisé en ce que le rapport M₂O/SiO₂ de ladite solution d'activation est compris entre 0,15 et 0,35.

Dans un mode de réalisation, le procédé d'ignifugation de matériau selon l'invention est caractérisé en ce que le rapport M₂O/SiO₂ de ladite solution d'activation est compris entre 0,2 et 0,3.

De préférence, le au moins un silicate comprenant un oxyde de métal alcalin soluble est choisi dans le groupe constitué du silicate de sodium et du silicate de potassium, seuls ou en combinaison.

Dans un mode de réalisation, le procédé d'ignifugation de matériau selon l'invention est caractérisé en ce que la concentration en silicate de ladite solution d'activation est comprise entre 10 % et 40 % en masse.

Dans un mode de réalisation, le procédé d'ignifugation de matériau selon l'invention est caractérisé en ce que la concentration en silicate de ladite solution d'activation est comprise entre 10 % et 30 % en masse.

Dans un mode de réalisation, le procédé d'ignifugation de matériau selon l'invention est caractérisé en ce que la concentration en silicate de ladite solution d'activation est comprise entre 15 % et 25 % en masse.

Dans un mode de réalisation, le procédé d'ignifugation de matériau selon l'invention est caractérisé en ce qu'à l'étape w) est ajouté au moins un agent hydrophobe.

Dans un mode de réalisation, le procédé d'ignifugation de matériau selon l'invention est caractérisé en ce que le au moins un agent hydrophobe est choisi dans le groupe constitué des siliconates, des silanes, des siloxanes, et leurs mélanges.

Dans un mode de réalisation, le procédé d'ignifugation de matériau selon l'invention est caractérisé en ce que la concentration du au moins un agent hydrophobe de ladite solution d'activation est comprise entre 1 % et 10 % en masse.

Dans un mode de réalisation, le procédé d'ignifugation de matériau selon l'invention est caractérisé en ce que la concentration du au moins un agent hydrophobe de ladite solution d'activation est comprise entre 2 % et 8 % en masse.

Dans un mode de réalisation, le procédé d'ignifugation de matériau selon l'invention est caractérisé en ce que la concentration du au moins un agent hydrophobe de ladite solution d'activation est comprise entre 3 % et 6 % en masse.

Dans un mode de réalisation, le procédé d'ignifugation de matériau selon l'invention est caractérisé en ce qu'à l'étape w) est ajouté au moins un tensio-actif.

Dans un mode de réalisation, le procédé d'ignifugation de matériau selon l'invention est caractérisé en ce que le au moins un tensio-actif est un tensio-actif anionique choisi dans le groupe constitué par les C8-C18-alkyle sulfates, les C8-C18-alkyle éther sulfates, les acides C8-C18-alkyle aryle sulfonique, les acides gras en C8-C18 et leurs mélanges.

Dans un mode de réalisation, le procédé d'ignifugation de matériau selon l'invention est caractérisé en ce que la concentration du au moins un tensio-actif de ladite solution d'activation est comprise entre 0,005 % et 0,15 % en masse.

Dans un mode de réalisation, le procédé d'ignifugation de matériau selon l'invention est caractérisé en ce que la concentration du au moins un tensio-actif de ladite solution d'activation est comprise entre 0,01 % et 0,1 % en masse.

Dans un mode de réalisation, le procédé d'ignifugation de matériau selon l'invention est caractérisé en ce que la concentration du au moins un tensio-actif de ladite solution d'activation est comprise entre 0,025 % et 0,075 % en masse.

Dans un mode de réalisation, le procédé d'ignifugation de matériau selon l'invention est caractérisé en ce qu'à l'étape w) est ajouté au moins une poudre d'albumine d'œuf.

Dans un mode de réalisation, le procédé d'ignifugation de matériau selon l'invention est caractérisé en ce que la concentration de la au moins une poudre d'albumine d'œuf de ladite solution d'activation est comprise entre 0,1% et 3% en masse.

Dans un mode de réalisation, le procédé d'ignifugation de matériau selon l'invention est caractérisé en ce que la concentration de la au moins une poudre d'albumine d'œuf de ladite solution d'activation est comprise entre 0,2% et 2% en masse.

Dans un mode de réalisation, le procédé d'ignifugation de matériau selon l'invention est caractérisé en ce que la concentration de la au moins une poudre d'albumine d'œuf de ladite solution d'activation est comprise entre 0,3% et 1,2% en masse.

Dans un mode de réalisation, le procédé d'ignifugation de matériau selon l'invention est caractérisé en ce que la au moins une poudre d'albumine d'œuf est une fraction protéinique extraite de l'albumine d'œuf déglucosylée riche à 80%.

Par exemple la poudre d'albumine d'œuf est une poudre EAP-HWI (EGG ALBUMEN POWDER - HIGH WHIP INSTANT).

L'addition de poudre d'albumine d'œuf permet d'obtenir une suspension viscoélastique ayant une masse volumique plus faible ce qui est particulièrement avantageux pour la mise en œuvre du procédé d'ignifugation de la présente invention.

Dans un mode de réalisation, le procédé d'ignifugation de matériau selon l'invention est caractérisé en ce que la masse volumique de la suspension viscoélastique mise en contact avec ledit matériau est comprise entre 250 et 2000 Kg/m3.

Dans un mode de réalisation, le procédé d'ignifugation de matériau selon l'invention est caractérisé en ce que la masse volumique de la suspension viscoélastique mise en contact avec ledit matériau est comprise entre 500 et 1500 Kg/m3.

Dans un mode de réalisation, le procédé d'ignifugation de matériau selon l'invention est caractérisé en ce que la masse volumique de la suspension viscoélastique mise en contact avec ledit matériau est comprise entre 800 et 1000 Kg/m3.

Dans un mode de réalisation, le procédé d'ignifugation de matériau selon l'invention est caractérisé en ce que la concentration en eau de la dite solution d'activation est comprise entre 50 % et 85 % en masse.

Dans un mode de réalisation, le procédé d'ignifugation de matériau selon l'invention est caractérisé en ce que la concentration en eau de la dite solution d'activation est comprise entre 55 % et 80 % en masse.

Dans un mode de réalisation, le procédé d'ignifugation de matériau selon l'invention est caractérisé en ce que la concentration en eau de la dite solution d'activation est comprise entre 60 % et 75 % en masse.

Dans un mode de réalisation, le procédé d'ignifugation de matériau selon l'invention est caractérisé en ce que le rapport H₂O/M₂O de ladite solution d'activation est compris entre 6 et 16.

Dans un mode de réalisation, le procédé d'ignifugation de matériau selon l'invention est caractérisé en ce que le rapport H₂O/M₂O de ladite solution d'activation est compris entre 8 et 14.

Dans un mode de réalisation, le procédé d'ignifugation de matériau selon l'invention est caractérisé en ce que le rapport H₂O/M₂O de ladite solution d'activation est compris entre 10 et 12.

Dans l'invention le procédé d'ignifugation de matériau selon l'invention est caractérisé en ce que la concentration molaire en ions hydroxyde de ladite solution d'activation est comprise entre 3 et 8 M.

Dans un mode de réalisation, le procédé d'ignifugation de matériau selon l'invention est caractérisé en ce que la concentration molaire en ions hydroxyde de ladite solution d'activation est comprise entre 4 et 7 M.

Dans un mode de réalisation, le procédé d'ignifugation de matériau selon l'invention est caractérisé en ce que la concentration molaire en ions hydroxyde de ladite solution d'activation est comprise entre 5 et 6 M.

L'utilisation d'une solution d'activation possédant une concentration molaire en ions hydroxydes plus faible que la moyenne des solutions d'activation couramment utilisées permet de rendre la dissolution ou l'attaque chimique du matériau pouzzolanique raisonnablement opérationnelle sur un chantier (temps courts) tout en fixant un taux alcalinité raisonnablement acceptable au niveau sécurité et santé. Cela permet également de contrôler les caractéristiques hygroscopiques de la solution, la formation de sels et de carbonates est largement diminuée.

Dans un mode de réalisation, le procédé d'ignifugation de matériau selon l'invention est caractérisé en ce que le rapport molaire Si/Al de ladite solution d'activation est comprise entre 0,5 et 4.

Dans un mode de réalisation, le procédé d'ignifugation de matériau selon l'invention est caractérisé en ce que le rapport molaire Si/Al de ladite solution d'activation est comprise entre 0,75 et 3,5.

Dans un mode de réalisation, le procédé d'ignifugation de matériau selon l'invention est caractérisé en ce que le rapport molaire Si/Al de ladite solution d'activation est comprise entre 1 et 3.Dans un mode de réalisation, le procédé d'ignifugation de matériau selon l'invention est caractérisé en ce qu'à l'étape y) le matériau pouzzolanique est du métakaolin.

Dans un mode de réalisation, le procédé d'ignifugation de matériau selon l'invention est caractérisé en ce qu'à l'étape z) le rapport Al₂O₃/M₂O de ladite suspension viscoélastique est compris entre 0,7 et 1,3.

Dans un mode de réalisation, le procédé d'ignifugation de matériau selon l'invention est caractérisé en ce qu'à l'étape z) le rapport Al₂O₃/M₂O de ladite suspension viscoélastique est compris entre 0,8 et 1,2.

Dans un mode de réalisation, le procédé d'ignifugation de matériau selon l'invention est caractérisé en ce qu'à l'étape z) le rapport Al₂O₃/M₂O de ladite suspension viscoélastique est compris entre 0,9 et 1,1.

Idéalement le rapport Al₂O₃/M₂O de ladite suspension viscoélastique est égal à 1.

On décrit également une mousse polyuréthane ignifugée obtenue par imprégnation selon le procédé de l'invention.

Dans un mode de réalisation, ladite mousse polyuréthane ignifugée obtenue par imprégnation selon le procédé de l'invention est caractérisée en ce qu'elle comprend une teneur en géopolymère comprise entre 5 et 60 Kg/m³.

Dans un mode de réalisation, ladite mousse polyuréthane ignifugée obtenue par imprégnation selon le procédé de l'invention est caractérisée en ce qu'elle comprend une teneur en géopolymère comprise entre 10 et 50 Kg/m³.

Dans un mode de réalisation, ladite mousse polyuréthane ignifugée obtenue par imprégnation selon le procédé de l'invention est caractérisée en ce qu'elle comprend une teneur en géopolymère comprise entre 20 et 40 Kg/m³.

On décrit également un aggloméré ignifugé obtenu par mélange selon le procédé de l'invention.

On entend par « aggloméré », un matériau de construction artificiel de forme géométrique régulière, résultant de la prise et du durcissement du mélange d'un liant et de matériaux inertes.

Dans un mode de réalisation, l'aggloméré ignifugé obtenu par mélange selon le procédé de l'invention est caractérisé en ce qu'il comprend une teneur en géopolymère comprise entre 30 et 130 Kg/m³.

Dans un mode de réalisation, l'aggloméré ignifugé obtenu par mélange selon le procédé de l'invention est caractérisé en ce qu'il comprend une teneur en géopolymère comprise entre 50 et 100 Kg/m³.

Dans un mode de réalisation, l'aggloméré ignifugé obtenu par mélange selon le procédé de l'invention est caractérisé en ce qu'il comprend une teneur en géopolymère comprise entre 60 et 90 Kg/m³.

On décrit également un matériau composite ignifugé obtenu par enduction selon le procédé de l'invention.

On entend par « matériau composite », matériau formé de plusieurs composants élémentaires dont l'association confère à l'ensemble des propriétés qu'aucun des composants pris séparément ne possède.

Dans un mode de réalisation, le matériau composite ignifugé obtenu par enduction selon le procédé de l'invention est caractérisé en ce qu'il comprend un grammage de géopolymère compris entre 500 et 1500 g/m².

Dans un mode de réalisation, le matériau composite ignifugé obtenu par enduction selon le procédé de l'invention est caractérisé en ce qu'il comprend un grammage de géopolymère compris entre 700 et 1000 g/m².

Dans un mode de réalisation, le matériau composite ignifugé obtenu par enduction selon le procédé de l'invention est caractérisé en ce qu'il comprend un grammage de géopolymère compris entre 800 et 900 g/m².

On décrit également une unité de construction ignifugée obtenue par le procédé selon l'invention.

On entend par « unité de construction », tout élément susceptible d'être utilisé pour la fabrication d'un bâtiment, par exemple une plaque, une poutre, une brique, etc...

On décrit également un Géopolymère comprenant :
- de 80% à 98% en masse de matériau pouzzolanique polymérisé ;
- de 1 % à 7 % en masse d'agent hydrophobe ;
- de 0.005 % à 0.15 % en masse de tensio-actif ;
caractérisé en ce qu'il possède un ratio Si/Al compris entre 1 et 3.

### Exemples

### Exemple 1 : formulations de suspensions viscoélastiques

**Tableau 1 : formulation d'une suspension viscoélastique à partir d'une solution d'activation de base 100% Na.**

| | | Composants | % de matières sèches |
|---|---|---|---|
| *Matériau pouzzolanique* | 1 | Métakaolin | 31,75 |
| *Solution d'activation* | 2A | Hydroxyde de sodium | 5,67 |
| | 2B | Silicate de sodium | 13,38 |
| *Autres composants* | 3 | Agent hydrophobe méthyl silicone de potassium Silres BS16 | 3,54 |
| | 4 | Tensio-actifs anioniques Empicol XHL-300 | 0,033 |
| **Total EAU** | | | **45,63 %** |

**Tableau 2 : formulation d'une suspension viscoélastique à partir d'une solution d'activation de base K**

| | | Composants | % de matières sèches |
|---|---|---|---|
| *Matériau pouzzolanique* | 1 | Métakaolin | 33,6% |
| *Solution d'Activation* | 2A | Hydroxyde de potassium | 7,18 |
| | 2B | Silicate de sodium | 5,19 |
| | 2C | Silicate de potassium | 7,34 |
| *Autres composants* | 3 | Agent hydrophobe méthyl silicone de potassium Silres BS16 | 3,51 |
| | 4 | Tensio-actifs anioniques Empicol XHL-300 | 0,035 |
| **Total EAU** | | | **43,15 %** |

### Exemple 2 : Exemple de fabrication d'une suspension viscoélastique selon l'invention :

Dans un disperseur muni d'une roue défloculeuse de 55 mm de diamètre, est introduit sous agitation 300 rpm :
- une solution alcaline d'hydroxyde de potassium à 7,5M ;
- des silicates de potassium et de sodium ;
- du méthyl siliconate de potassium Silres BS16 ;
- du tensio actif Empicol XHL-300.

Du métakaolin est introduit en pluie dans cette composition pour obtenir une suspension viscoélastique.

La suspension viscoélastique est mélangée à une vitesse de 1600 rpm pendant environ 40 minutes.

De préférence, sous agitation douce à 300 rpm, la suspension viscoélastique est refroidie jusqu'à une température d'environ 20°C.

Exemple 3 : Aggloméré de copeaux de bois liées ignifugés :

Masse volumique de suspension viscoélastique utilisée : 1500 Kg/m³.

Teneur en géopolymère présente dans l'aggloméré après séchage : 70,6 Kg/m³.

### Mode opératoire :

Les copeaux de bois sont versés dans un bol de mélangeur Kenwood, sous mélange rotatif, (moteur tournant à bas régime) l'eau y est ajoutée en spray puis la suspension viscoélastique est ajoutée progressivement en fin filet pour que la distribution des liquides soit la plus uniforme possible.

Est versé un peu de la masse de copeaux dans un bécher et l'ensemble est pressé au moyen d'un autre bécher emboité dans le premier.

Test feu : une pastille de copeaux de bois pressés et liés comme décrit précédemment à une épaisseur de 3 cm et un diamètre de 9 cm. La pointe de la flamme d'un chalumeau est placée et centrée sur la pastille.

Est observé une combustion très lente par pyrolyse sans flammes et sans fumées visibles. Il n'y a pas de combustion franche avec flamme, ni de propagation de flamme lorsque la flamme du chalumeau est appliquée sur la pastille. Il n'est pas observé de fumées de combustion.
Les relevés avec un pyromètre IR au dos de la pastille se stabilisent à 60°C environ, la face étant soumise à la flamme.

| minutes | T°C(dos) | T°C (face) |
|---|---|---|
| 15 | 56 | Entre 500 et 1000 |
| 20 | 59 | Entre 500 et 1000 |
| 25 | 59-60 | Entre 500 et 1000 |
| 30 | 59-60 | Entre 500 et 1000 |
| 35 | 59-60 | Entre 500 et 1000 |

| Arrêt de la flamme | | |
|---|---|---|
| 36 | 59-60 | 250 |
| 45 | 59-60 | 175 |

Tableau 3 : suivi de la température au dos d'une pastille selon l'exemple 3, en fonction du temps.

### Exemple 4 : Mousse polyuréthane ignifugée :

Masse volumique de suspension viscoélastique utilisée : 1500 Kg/m³.

Teneur en géopolymère présente dans la mousse polyuréthane après séchage : 31 Kg/m³.

Des mousses polyuréthanes non traitées ont été imprégnées de suspension viscoélastique et mises à sécher durant une semaine à température ambiante.

L'imprégnation des mousses a été réalisée par trempage directement dans un bac de peinture contenant la suspension viscoélastique, puis l'excès a été retiré en écrasant les mousses de polyuréthane.

À la suite du séchage un essai feu a été réalisé par mise en combustion de la mousse traitée ainsi que de la mousse non traitée.

Pour la mousse polyuréthane non traitée, est observé une combustion avec formation de flammes, gouttelettes et fumées.

Pour la mousse polyuréthane traitée avec un liant selon l'invention, il n'est pas observé de combustion de la mousse, ni de dégagement de fumées.

### Exemple 5 : Matériau composite :

Masse volumique de suspension viscoélastique utilisée : 1500 Kg/m³.

Grammage de géopolymère présent dans le matériau composite après séchage : 840 g/m².

Une suspension viscoélastique a été utilisée afin de former un composite plus résistant mécaniquement avec des propriétés anti-feu.

De la fibre de verre a été appliquée entre deux couches de suspension viscoélastique.

Le composite ainsi fabriqué peut être utilisé sous forme de panneaux pour les coffrages de réseaux électriques, permettant ainsi la protection contre le vandalisme mais aussi contre les incendies.

### Exemple 6 : Ignifugation d'un matériau par enduction d'une suspension viscoélastique :

Masse volumique de suspension viscoélastique utilisée : 1500 Kg/m³.

Grammage de géopolymère après séchage : 297,2 g/m²

Une suspension viscoélastique est appliquée avec un pinceau sur des planches en bois (1 couche ou 2 couches).

Un essai feu est ensuite réalisé après séchage de la suspension viscoélastique. Mise en combustion de plaques enduites avec la suspension viscoélastique ainsi que d'une plaque non enduite.

### Résultats :

Plaque de bois neutre après combustion de 5 min. Le bois à craqué sous la chaleur, à l'arrêt du chalumeau une flamme a continué à se consumer pendant quelques secondes.

Plaque de bois avec 1 couche d'enduit de suspension viscoélastique après combustion de 5 min. Le bois à craqué sous la chaleur, à l'arrêt du chalumeau il n'est pas observé de flammes.

Plaque de bois avec 2 couches d'enduit de suspension viscoélastique après combustion de 5 min. Seule la surface a été détériorée, il n'est pas observé de craquage du bois, ni de flammes.

### Exemple 7 : Ignifugation de matériaux bio sourcés selon le procédé de l'invention et comparaison avec des matériaux non traités ou ayant subis des traitements anti-feu chimiques

De la ouate de cellulose a été enduite de suspension viscoélastique puis mise à sécher. Elle est ensuite soumise à combustion par la flamme d'un chalumeau durant 180 secondes. A l'arrêt du chalumeau il n'est pas observé de flammes.

De la ouate de cellulose ayant subi un traitement chimique anti feu (5% de sels de bore) est soumise à combustion par la flamme d'un chalumeau durant 180 secondes. A l'arrêt du chalumeau est observé de la fumée et la propagation de flamme continue.

Du polystyrène expansé a été enduit de suspension viscoélastique puis mis à sécher. Il est ensuite soumis à combustion par la flamme d'un chalumeau durant 180 secondes. A l'arrêt du chalumeau il n'est pas observé de flammes ni de gouttelettes ni de fumées, le matériau n'a pas été détérioré durant la combustion.

Un panneau en laine de mouton a été enduit de suspension viscoélastique puis mis à sécher. Il est ensuite soumis à combustion par la flamme d'un chalumeau durant 180 secondes. A l'arrêt du chalumeau il n'est pas observé de flammes ni de gouttelettes ni de fumées.

Un panneau en laine de mouton non traité anti-feu est soumis à combustion par la flamme d'un chalumeau durant 180 secondes. A l'arrêt du chalumeau est observé des flammes ainsi que la présence de fumées et de gouttelettes de polyéthylène qui sert de liant pour la laine, la combustion se poursuit.

## Revendications

1. Procédé d'ignifugation de matériau comprenant les étapes de :
a) mise en contact dudit matériau avec une suspension viscoélastique obtenue par le mélange d'un matériau pouzzolanique avec une solution d'activation alcaline comprenant au moins un hydroxyde de métal soluble, dans laquelle la concentration molaire en ions hydroxyde de la solution d'activation est comprise entre 3 et 8 M;
b) géopolymérisation de ladite suspension viscoélastique;
c) obtention d'un matériau ignifugé comprenant un géopolymère.

2. Procédé d'ignifugation de matériau selon la revendication 1 **caractérisé en ce que** la concentration en matériau pouzzolanique de ladite suspension viscoélastique est comprise entre 15 % et 50 % en masse.

3. Procédé d'ignifugation de matériau selon l'une quelconque des revendications précédentes **caractérisé en ce que** le ratio SiO₂/Al₂O₃ de ladite suspension viscoélastique est compris entre 2 et 5.

4. Procédé d'ignifugation de matériau selon selon l'une quelconque des revendications précédentes **caractérisé en ce que** ledit matériau pouzzolanique est du métakaolin.

5. Procédé d'ignifugation de matériau selon l'une quelconque des revendications précédentes **caractérisé en ce que** la concentration en hydroxyde de métal de ladite suspension viscoélastique est comprise entre 2 % et 10 % en masse.

6. Procédé d'ignifugation de matériau selon l'une quelconque des revendications précédentes **caractérisé en ce que** la mise en contact est réalisée par une technique choisie dans le groupe constitué de l'imprégnation, du mélange, de l'enduction ou couchage.

7. Procédé d'ignifugation de matériau selon l'une quelconque des revendications précédentes **caractérisé en ce que** le matériau est de forme choisie dans le groupe constitué des blocs, des fragments, des filaments ou fibres, des particules, seuls ou en combinaison.

8. Procédé d'ignifugation de matériau selon selon l'une quelconque des revendications précédentes **caractérisé en ce que** le matériau est choisi dans le groupe constitué des matériaux organiques et des matériaux inorganiques, seuls ou en combinaison.

9. Procédé d'ignifugation de matériau selon l'une quelconque des revendications précédentes **caractérisé en ce qu'**il comprend préalablement à l'étape a) une étape de fabrication de la suspension viscoélastique comprenant les étapes de :
w) Mise en solution aqueuse d'au moins un hydroxyde de métal soluble.
x) agitation et obtention d'une solution d'activation ;
y) introduction d'un matériau pouzzolanique dans ladite solution d'activation ;
z) Mélange et obtention d'une suspension viscoélastique.

10. Procédé d'ignifugation de matériau selon la revendication 9 **caractérisé en ce que** la concentration molaire en ions hydroxydes du au moins un hydroxyde de métal soluble mis en solution aqueuse est comprise entre 5 et 10 M.

## Patentansprüche

1. Verfahren zum Feuerfestmachen eines Materials umfassend die Schritte:
a) Inkontaktbringen des Materials mit einer viskoelastischen Suspension, die erhalten ist durch Mischen eines puzzolanischen Materials mit einer alkalischen Aktivierungslösung, die mindestens ein lösliches Metallhydroxid umfasst, in der die molare Konzentration an Hydroxidionen der Aktivierungslösung 3 bis 8 M beträgt;
b) Geopolymerisieren der viskoelastischen Suspension;
c) Erhalten eines feuerfesten Materials umfassend ein Geopolymer.

2. Verfahren zum Feuerfestmachen eines Materials nach Anspruch 1, **dadurch gekennzeichnet, dass** die Konzentration an puzzolanischem Material der viskoelastischen Suspension 15 Gew.-% bis 50 Gew.-% beträgt.

3. Verfahren zum Feuerfestmachen eines Materials nach einem der vorangehenden Ansprüche, **dadurch gekennzeichnet, dass** das Verhältnis SiO₂/Al₂O₃ der viskoelastischen Suspension 2 bis 5 beträgt.

4. Verfahren zum Feuerfestmachen eines Materials nach einem der vorangehenden Ansprüche, **dadurch gekennzeichnet, dass** das puzzolanische Material aus Metakaolin besteht.

5. Verfahren zum Feuerfestmachen eines Materials nach einem der vorangehenden Ansprüche, **dadurch gekennzeichnet, dass** die Konzentration an Metallhydroxid der viskoelastischen Suspension 2 Gew.-% bis 10 Gew.-% beträgt.

6. Verfahren zum Feuerfestmachen eines Materials nach einem der vorangehenden Ansprüche, **dadurch gekennzeichnet, dass** das Inkontaktbringen erfolgt durch eine Technik, die ausgewählt ist aus der Gruppe bestehend aus Imprägnieren, Mischen, Aufstreichen oder Beschichten.

7. Verfahren zum Feuerfestmachen eines Materials nach einem der vorangehenden Ansprüche, **dadurch gekennzeichnet, dass** das Material eine Form aufweist, die ausgewählt ist aus der Gruppe bestehend aus Blöcken, Bruchstücken, Filamenten oder Fasern, Partikeln, einzeln oder in Kombination.

8. Verfahren zum Feuerfestmachen eines Materials nach einem der vorangehenden Ansprüche, **dadurch gekennzeichnet, dass** das Material ausgewählt ist aus der Gruppe bestehend aus organischen Materialien und anorganischen Materialien, einzeln oder in Kombination.

9. Verfahren zum Feuerfestmachen eines Materials nach einem der vorangehenden Ansprüche, **dadurch gekennzeichnet, dass** es vor Schritt a) einen Schritt zum Herstellen der viskoelastischen Suspension umfasst, der die Schritte umfasst:
w) Wenigstens ein lösliches Metallhydroxid in wässrige Lösung bringen,
x) Schütteln und Erhalten einer Aktivierungslösung,
y) Einführen eines puzzolanischen Materials in die Aktivierungslösung;
z) Mischen und Erhalten einer viskoelastischen Suspension.

10. Verfahren zum Feuerfestmachen eines Materials nach Anspruch 9, **dadurch gekennzeichnet, dass** die molare Konzentration an Hydroxidionen des in wässrige Lösung gebrachten mindestens einen löslichen Metallhydroxids 5 bis 10 M beträgt.

## Claims

1. A process for fireproofing materials comprising the steps of:
a) placing a material in contact with a viscoelastic suspension obtained by mixing a pozzolanic material with an alkaline activation solution comprising at least one soluble metal hydroxide, the viscoelastic suspension having a molar concentration of hydroxide ions of between 3 and 8 M;
b) geopolymerizing the viscoelastic suspension; and
c) obtaining a fireproofed material comprising a geopolymer.

2. The process for fireproofing materials according to claim 1 **characterized in that** the concentration of pozzolanic material in the viscoelastic suspension is between 15% and 50% by mass.

3. A process for manufacturing a viscoelastic suspension according to any of the previous claims **characterized in that** the SiO₂/Al₂O₃ ratio of the viscoelastic suspension is between 2 and 5.

4. The process for fireproofing materials according to any of the previous claims **characterized in that** the pozzolanic material is metakaolin.

5. The process for fireproofing materials according to any of the previous claims **characterized in that** the concentration of metal hydroxide in the viscoelastic suspension is between 2% and 10% by mass.

6. The process for fireproofing materials according to any of the previous claims **characterized in that** the manner of contact is performed by a technique chosen from the group consisting of impregnation, mixing, coating or layering.

7. The process for fireproofing materials according to any of the previous claims **characterized in that** the material is in the form of blocks, fragments, filaments or fibers, particles, alone or in combination.

8. The process for fireproofing materials according to any of the previous claims **characterized in that** the material is an organic material, an inorganic material, alone or in combination.

9. The process to fireproof materials according to any of the previous claims characterized **characterised in that** it comprise prior to step a) a step of manufacturing the viscoelastic suspension comprising the steps of :
w) setting in aqueous solution of at least one soluble metal hydroxide.
x) agitating and obtaining an activation solution;
y) introducing a pozzolanic material into the activation solution;
z) mixing and obtaining a viscoelastic suspension.

10. The process to fireproof materials according to claim 9, **characterised in that** the molar concentration of hydroxide ions of the at least one soluble metal hydroxide in aqueous solution is between 5 and 10 M.
